# EUROPÄISCHE PATENTSCHRIFT

(11) **EP 1 769 006 B1**
(45) Veröffentlichungstag und Bekanntmachung des Hinweises auf die Patenterteilung: **02.01.2008**
(21) Anmeldenummer: 05774840.2
(22) Anmeldetag: 18.07.2005
(51) Int. Cl.: C08B 37/00

(54) **VERFAHREN ZUR VORBEREITUNG VON HAFERSPELZEN ZUR XYLAN-GEWINNUNG**
METHOD FOR PREPARING OAT HUSKS FOR XYLAN PRODUCTION
PROCEDE DE PREPARATION DE BALLES D'AVOINE POUR LA PRODUCTION DE XYLANE

(30) Priorität: 19.07.2004 DE 102004034849
(43) Veröffentlichungstag der Anmeldung: 04.04.2007
(73) Patentinhaber: Peter Kölln KgaA, 25336 Elmshorn (DE); Wolff Cellulosics GmbH & Co.KG, 29699 Bomlitz (DE)
(72) Erfinder: KAHLKE, Dirk, 25421 Pinneberg (DE); PULS, Jürgen, 21465 Reinbek (DE); SAAKE, Bodo, 21033 Hamburg (DE)
(74) Vertreter: Rohnke, Christian
(86) Internationale Anmeldenummer: PCT/EP2005/007859
(87) Internationale Veröffentlichungsnummer: WO 2006/008136

(56) Entgegenhaltungen:
- US-A- 770 794
- US-A- 4 859 283
- DATABASE CHEMABS [Online] CHEMICAL ABSTRACTS SERVICE, COLUMBUS, OHIO, US; 20. März 2004 (2004-03-20), XP002351798 gefunden im STN Database accession no. 140:201236 & B. SAAKE ET AL.: "Isolation and characterization of arabinoxylan from oat spelts" ACS SYMPOSIUM SERIES, Bd. 864, 2004, Seiten 52-65, XP009056328 ISSN: 0065-7727
- "Zerkleinerung von Nahrungs- und Futtergetreide in Walzenstühlen" 1982, VEB FACHBUCHVERLAG LEIPZIG * Seiten 83-86 *

## Beschreibung

Die vorliegende Erfindung bezieht sich auf ein Verfahren zur Vorbereitung von Haferspelzen zur Xylan-Gewinnung mit den Merkmalen des Anspruchs 1.

Aus der DE 3784919 ist ein Verfahren bekannt, bei dem Haferspelzen durch Auslaugen zum Herstellen diätetischer Fasern verwendet werden.

Aus der US-A-4 859 283 ist der Einsatz von Walzen bei der Verarbeitung von Haferspelze bekannt.

Haferspelzen sind ein stark Xylan-haltiger Rohstoff. Sie fallen in großen Mengen in Hafermühlen an und machen dort 25 bis 30 % des Gewichts des Getreides aus, das in der Mühle verarbeitet wird. In den 70ern waren Haferspelzen eine Hauptquelle für die Furfural-Produktion. Die Bedeutung für diesen Industriezweig ist aber geringer geworden, nachdem insbesondere in Afrika und Asien die Herstellung aus Reisrückständen sich wirtschaftlich als günstiger herausgestellt hat.

Gegenwärtig werden Haferspelzen vor allem als Zusatz für Tierfutter verwendet und dazu zumeist gemahlen und pelletiert. Der Preis dieser Produkte ist aber gering, und unter wirtschaftlichen Gesichtspunkten macht sich hier der Energieaufwand bei der Produktion noch zusätzlich negativ bemerkbar.

In den letzten Jahren hat das Interesse an der Verwendung von Xylan als Polymer stark zugenommen. Xylane wurden unter anderem als Gelbildner oder thermoplastischer Werkstoff getestet, aber auch als Füllstoff für Polypropylen, als Bestandteil von Farben oder für die Beschichtung von Cellulosefasern. Auch für die Verwendung in noch hochwertigeren Produkten kann die Anwendung von Xylan interessant werden, wie zum Beispiel als Substanz bei der Tablettenherstellung, für die Wundversorgung oder zur Vorsorge gegen Blutgerinnung. Trotz einer großen Anzahl möglicher Verwendungen ist Xylan bislang auf dem Markt nicht in großen Mengen verfügbar.

Die vorliegende Erfindung widmet sich der Aufgabe, ein Verfahren zur Vorbereitung von Haferspelzen zur Xylan-Gewinnung zu liefern, das den Ertrag und die Qualität des Produktes verbessert. Diese Aufgabe wird durch ein Verfahren mit den Merkmalen des Anspruchs 1 gelöst. Bevorzugte Ausgestaltungen sind in den Unteransprüchen angegeben.

Erfindungsgemäß werden Haferspelzen, um sie für die Xylan-Gewinnung vorzubereiten, durch einen Walzenstuhl beschickt und dort an ihrer Oberfläche aufgeraut. Die Hüllschicht der Haferspelzen, die unter anderem Lignin und Wachse enthält, wird dabei unter Voreilung des Walzenstuhls teilweise zerstört, während die Haferspelze im wesentlichen als Ganzes erhalten bleibt.

Bevorzugt ist, die Haferspelzen in einem kontinuierlichen, gleichmäßigen Volumenstrom in den Walzenstuhl zu schicken, um ein gleichmäßiges Verarbeiten sicherzustellen. Das gewünschte Ergebnis wird in einem Walzenstuhl mit Riffelwalzen unter Voreilung erzielt.

Um die Qualität des Produktes weiter zu verbessern, kann vor dem Verarbeitungsschritt im Walzenstuhl ein Sicht-Schritt durchgeführt werden, in dem Feinteile aus den Haferspelzen gesiebt werden. Schon hier können Stärkepartikel ausgesondert werden, was dann aber insbesondere während des erfindungsgemäßen Vorbereitungsschrittes im Walzenstuhl und beim vorzugsweise anschließend durchgeführten Nachsichten erreicht wird.

Eine Anlage zur Durchführung einer bevorzugten Ausführungsform des erfindungsgemäßen Verfahrens weist beispielsweise vier Stationen auf: In einem Vorsichter werden Feinteile und darin auch schon Stärkepartikel von den Haferspelzen, die direkt von einer Mühle beschickt werden können, getrennt. Die so behandelten Haferspelzen werden mittels eines Dosierers in einem kontinuierlichen, gleichmäßigen Volumenstrom in einen Walzenstuhl gefördert. Nachdem die Haferspelze dort an ihrer Oberfläche aufgeraut und die Hüllschicht der Haferspelze teilweise zerstört wurde, die Haferspelze aber im wesentlichen als Ganzes erhalten blieb, wird sie einer Nachsichtung zugeführt, wo wiederum Feinteile und insbesondere Stärkepartikel ausgesondert werden. Die so vorbereiteten Haferspelzen können nun einem Xylan-Gewinnungsverfahren zugeführt werden.

Um die vorteilhafte Wirkung der mechanischen Vorbehandlung zu prüfen, wurden Extraktionen an Spelzen mit und ohne mechanische Vorbehandlung durchgeführt.

Das Referenzmaterial ohne mechanische Vorbehandlung wurde durch eine Wäsche mit heißem Wasser möglichst weitgehend von Stärkeverunreinigungen befreit ("Referenz"). An den mechanisch vorbehandelten Spelzen wurde keine Wäsche durchgeführt.

Die Wirkung der Vorbehandlung soll an zwei Beispielen dokumentiert werden.

### Beispiel 1:

Es wurde an beiden Spelzenmaterialien Extraktion mit 5%iger NaOH bei 90 °C und 10% Stoffdichte für 1 h durchgeführt. Der Extrakt wurde mit einer hydraulischen Presse über ein Sieb abgepresst. Der erhaltenen Rückstand wurde dann mit Wasser nachgewaschen und getrocknet. Das Filtrat wurde mit Essigsäure neutralisiert, in der dreifachen Menge an Ethanol gefällt und durch Filtration abgetrennt. Das erhaltenen Arabinoxylan wurde erneut in Wasser suspendiert (entsprechend dem Ausgangsvolumen). Der pH-Wert wurde auf 4 eingestellt und das Arabinoxylan erneut in Ethanol gefällt, abfiltriert und getrocknet.

Dabei wurden Extraktion und Aufarbeitung der Extrakte mehrfach durchgeführt, um die Versuchsschwankung zu ermitteln.

**Tab. 1: Vergleich der Ausbeuten und der Zusammensetzung des gewonnenen Pulvers aus der drucklosen Extraktion von vorbehandelten Spelzen und Referenz-Spelzen**

| *[% vom Rohstoff (Haferspelzen)]* | | | | | |
|---|---|---|---|---|---|
| Probe | Pulverausbeute | Lignin | Polysacharide | | |
| | | | Arabinoxylan | Glucan | Andere |
| Referenz-Spelzen | *41,5* ± *2,3* | *5,6* | *30,2* | *4,8* | *0,8* |
| Vorbehandelte Spelzen | *40,4* ± *0,4* | *4,5* | *34,3* | *0,6* | *0,9* |

Durch die mechanische Vorbehandlung wird die Reproduzierbarkeit der Extraktionen erheblich verbessert. Dadurch wird der Prozess besser steuerbar.

Zusätzlich wird die Selektivität der Extraktion durch die Vorbehandlung erheblich verbessert. Das erhaltenen Arabinoxylan weist einen signifikant geringeren Ligninanteil und vor allem einen wesentlich geringeren Glucangehalt auf. Die Glucanreduzierung geht vor allem auf deutliche Reduzierung des Stärkeverunreingungen zurück.

**Tab. 2: Vergleich der Ausbeuten und des Ligningehaltes der Extraktionsrückstände aus der drucklosen Extraktion von vorbehandelten Spelzen und Referenz-Spelzen**

| *[% vom Rohstoff (Haferspelzen)]* | | |
|---|---|---|
| Probe | Ausbeute | Ligningehalt % |
| Referenz-Spelzen | 41,3 | 4,9 |
| Vorbehandelte Spelzen | 41,7 | 3,5 |

Die nach der Extraktion erhaltenen Spelzenrückstände zeigen ebenfalls einen deutlich geringeren Ligningehalt für das Material aus dem Prozess mit mechanischer Vorbehandlung. Dadurch wird eine weitere Veredelung des Rückstandes durch Entfernung des Lignins in Bleichreaktionen wesentlich begünstigt.

### Beispiel 2:

Es wurde an beiden Spelzenmaterialien mehrfach eine Extraktion mit 5°/aiger NaOH bei 90 °C und 10% Stoffdichte für 1 h durchgeführt. Dabei wurde in der Reaktion der Reaktor mit 0.6 MPa O₂ beaufschlagt, so dass während der Extraktion gleichzeitig die Bedingungen einer alkalischen Sauerstoffbleiche erfüllt waren. Die weitere Aufarbeitung wurde analog zu Beispiel 1 vorgenommen.

**Tab. 3: Vergleich der Ausbeuten und der Zusammensetzung des gewonnenen Pulvers aus der kombinierten Bleiche und Extraktion von vorbehandelten Spelzen und Referenz-Spelzen**

| [% *vom Rohstoff (Haferspelzen)]* | | | | | |
|---|---|---|---|---|---|
| Probe | Ausbeute | Lignin | Polysacharide | | |
| | | | Arabinoxylan | Glucan | Andere |
| Referenz-Spelzen | 39,6 ± 1,5 | 5,6 | 28,8 | 4,4 | 0,8 |
| Vorbehandelte Spelzen | 39,0 ± 0,3 | 3,6 | 33,7 | 0,8 | 1,0 |

Durch die mechanische Vorbehandlung wird auch unter diesen Extraktionsbedingungen die Reproduzierbarkeit der Extraktionen erheblich verbessert. Die Selektivität der Extraktion wird ebenfalls erneut verbessert, so dass der Ligningehalt und die Stärkeverunreinigungen gegenüber der Referenzprobe deutlich reduziert werden.

Das erhaltene Arabinoxylan weist erneut einen signifikant geringeren Ligninanteil und einen wesentlichen geringeren Glucangehalt auf.

**Tab. 4: Vergleich der Ausbeuten und des Ligningehaltes der Extraktionsrückstände aus der kombinierten Bleiche und Extraktion von vorbehandelten Spelzen und Referenz-Spelzen**

| [*% vom Rohstoff (Haferspelzen)]* | | |
|---|---|---|
| Probe | Ausbeute | Ligningehalt |
| Referenz-Spelzen | 39,4 | 3,4 |
| Vorbehandelte Spelzen | 41,4 | 2,5 |

Auch nach der kombinierten Bleiche und Extraktion weisen die erhaltenen Spelzenrückstände einen deutlich geringeren Ligningehalte für das Material aus dem Prozess mit mechanischer Vorbehandlung auf.

Die Hauptvorteile der beschriebenen mechanischen Vorbehandlung können demnach wie folgt zusammengefasst werden:
- Verbesserung der Reproduzierbarkeit und damit der Steuerbarkeit der Extraktion,
- Erhöhung der Selektivität durch Verringerung des Ligningehaltes und des Stärkegehaltes im erhaltenen Arabinoxylan,
- Verringerung des Ligningehaltes im verbleibenden Extraktionsrückstand und damit eine Verbesserung der Verwertungsmöglichkeit des Rückstandes insbesondere in Prozessen die eine Bleiche des Rückstandes wünschenswert erscheinen lassen.

## Patentansprüche

1. Verfahren zur Vorbereitung von Haferspelzen zur Xylan-Gewinnung mit dem Schritt, Haferspelzen durch einen Walzenstuhl mit Riffelwalzen unter Voreilung an ihrer Oberfläche aufzurauen, wobei die Hüllschicht der Haferspelzen teilweise zerstört wird, während die Haferspelze im wesentlichen als Ganzes erhalten bleibt.

2. Verfahren nach Anspruch 1, **dadurch gekennzeichnet, dass** die Haferspelzen in einem kontinuierlichen, gleichmäßigen Volumenstrom in den Walzenstuhl geschickt werden.

3. Verfahren nach einem der vorhergehenden Ansprüche, **dadurch gekennzeichnet, dass** bevor die Haferspelzen durch den Walzenstuhl geschickt werden, Feinteile aus den Haferspelzen gesichtet werden.

4. Verfahren nach einem der vorhergehenden Ansprüche, **dadurch gekennzeichnet, dass** nach dem die Haferspelzen durch den Walzenstuhl geschickt wurden, Feinteile abgesiebt werden.

## Claims

1. Method for preparing oat husks for xylan production having the step of roughening oat husks on their surface by a roller mill having fluted rolls with differential roll speed, wherein the hull layer of the oat husks is partially destroyed, whereas the oat husk is essentially retained as a whole.

2. Method according to Claim 1, **characterized in that** the oat husks are fed into the roller mill at a continuous uniform volumetric flow rate.

3. Method according to one of the preceding claims, **characterized in that**, before the oat husks are fed through the roller mill, fines are sieved from the oat husks.

4. Method according to one of the preceding claims, **characterized in that**, after the oat husks have been fed through the roller mill, fines are sieved off.

## Revendications

1. Procédé pour la préparation de glumes d'avoine pour la production de xylane, avec l'étape consistant à rendre rugueuses des glumes d'avoine, grâce à un moulin à cylindres comportant des cylindres cannelés, avec avance en surface, l'enveloppe des glumes d'avoine étant alors partiellement détruite, tandis que la glume d'avoine reste pour l'essentiel entière.

2. Procédé selon la revendication 1, **caractérisé en ce que** les glumes d'avoine sont envoyées dans le moulin à cylindres selon un débit volumique continu et uniforme.

3. Procédé selon l'une des revendications précédentes, **caractérisé en ce que** les fines sont isolées des glumes d'avoine par tamisage avant que les glumes d'avoine ne sont envoyées dans le moulin à cylindres.

4. Procédé selon l'une des revendications précédentes, **caractérisé en ce que** les fines sont isolées par tamisage avant que les glumes d'avoine ne soient envoyées dans le moulin à cylindres.
